# EUROPÄISCHE PATENTSCHRIFT

(11) **EP 1 189 383 B1**
(45) Veröffentlichungstag und Bekanntmachung des Hinweises auf die Patenterteilung: **23.11.2005**
(21) Anmeldenummer: 01119278.8
(22) Anmeldetag: 09.08.2001
(51) Int. Cl.: H04L 12/24, H04L 29/12

(54) **Verfahren und Anordnung für eine Zuweisung von Knotennummern zu Netzknoten eines Netzwerks**
Method and arrangement for assignment of node number to nodes of a network
Méthode et arrangement pour l'attribution des numeros de noeuds aux noeuds d'un réseau

(30) Priorität: 19.09.2000 DE 10046311
(43) Veröffentlichungstag der Anmeldung: 20.03.2002
(73) Patentinhaber: SIEMENS AKTIENGESELLSCHAFT, 80333 München (DE)
(72) Erfinder: Fieremans, Geert, 1730 Asse (BE)

(56) Entgegenhaltungen:
- DE-A- 19 902 366
- US-A- 5 394 556
- DROMS R: "AUTOMATED CONFIGURATION OF TCP/IP WITH DHCP" IEEE INTERNET COMPUTING, IEEE SERVICE CENTER, PISCATAWAY, NJ, US, Bd. 3, Nr. 4, 1999, Seiten 45-53, XP000874503 ISSN: 1089-7801
- DROMS R: "RFC 2131 - Dynamic Host Configuration Protocol (DHCP)" IETF REQUEST FOR COMMENTS, März 1997 (1997-03), XP002193184 Gefunden im Internet: <URL:http://www.ietf.org/rfc/rfc2131.txt> [gefunden am 2002-03-14]
- DROMS R ET AL: "Authentication for DHCP Messages" IETF REQUEST FOR COMMENTS, August 1998 (1998-08), XP002188115 Gefunden im Internet: <URL:http://www.ietf.org/proceedings/98aug /I-D/draft-ietf-dhc-authenticati on-08.txt> [gefunden am 2002-01-23]

## Beschreibung

Kommunikationsnetze bzw. Rechnernetze bestehen aus - beispielsweise durch Kommunikationsanlagen bzw. Datenverarbeitungseinrichtungen gebildete - Netzknoten und aus den die einzelnen Netzknoten untereinander verbindenden Verbindungsleitungen. Hierbei sind eine Vielzahl von unterschiedlichen Netzwerkstrukturen (in der Literatur auch als Netzwerktopologien bezeichnet), wie beispielweise ein Stern-Netzwerk, ein Ring-Netzwerk, ein Baum-Netzwerk, ein Ketten-Netzwerk oder ein Bus-Netzwerk bekannt.

Bei Netzwerken wird je nach Topologie des jeweiligen Netzwerks zwischen verbindungslosen und verbindungsorientierten Netzwerken unterschieden. In verbindungslosen Netzwerken entfällt eine einer Nachrichtenübermittlung zwischen den Netzwerken zugeordneten Kommunikationsendgeräten vorausgehende Signalisierungsphase, in deren Rahmen eine Verbindung zwischen den Kommunikationsendgeräten eingerichtet wird. In einem verbindungslosen Netzwerk - beispielsweise einem IPorientierten (Internet Protocol) Rechnernetz - wird ein zu übermittelndes Nachrichtenpaket an jedes dem Netzwerk zugeordnete Kommunikationsendgerät übermittelt. Die Entscheidung welches Kommunikationsendgerät das empfangene Nachrichtenpaket weiterverarbeitet bzw. verwirft wird durch den Empfänger des Nachrichtenpakets getroffen.

Die Druckschrift Droms R: "Automated Configuration of TCP/IP With DHCP", IEEE Internet Computing, IEEE Service Center, Piscataway, NJ, US, Bd. 3, Nr. 4, 1999, S. 44-53, XP 000874503 ISSN: 1089-7801 - zeigt ein Verfahren und ein verbindungsloses Netzwerk (Computer-Netzwerk), mit dem bzw. in dem den Netzknoten des verbindungslosen Netzwerks, hier den Computern des Computer-Netzwerks, als Knotennummern individuelle IP-Adressen zugewiesen werden. Dabei sendet ein neu eingeschalteter Netzknoten (Computer) eine sog. Broadcast-Meldung, also eine an alle Netzwerkelemente adressierte Meldung, zum Auffinden einer zentralen Einrichtung (DHCP-Server) aus. Eine damit aufgefundene zentrale Einrichtung (DHCP-Server) antwortet auf diese erste Anforderungsmeldung, wobei die Antwort eine Adressinformation über diese zentrale Einrichtung und einen Vorschlag für eine Knotennummer für den neu eingeschalteten Netzknoten umfasst. In einem nächsten Schritt sendet der neu eingeschaltete Netzknoten als Antwort eine Abfragemeldung zu der zentralen Einrichtung, um die Zuweisung der zuvor vorgeschlagenen Netzknotennummer zu beantragen, wobei die positive Beantwortung dieser Abfragemeldung durch die zentrale Einrichtung zu der entgültigen zuweisung der Netzknotennummer führt.

In einem verbindungsorientierten Netzwerk - beispielsweise einem ISDN-orientierten Kommunikationsnetz - erfolgt eine Nachrichtenübermittlung von Netzknoten zu Netzknoten über eine im Rahmen einer Signalisierungsverbindung vorher eingerichtete Verbindung. Eine Adressierung der einzelnen Netzknoten des Netzwerks erfolgt dabei anhand von - in der Regel durch einen Integer-Wert gebildete - Knotennummern. Um eine eindeutige Adressierung gewährleisten zu können, ist es notwendig, daß die jeweiligen Knotennummern im Netzwerk eindeutig sind. In Fällen, in denen die Knotennummern nicht eindeutig sind, kann eine gezielte Zustellungen von Nachrichten über das Netzwerk nicht mehr garantiert werden.

Eine Administrierung der den Netzknoten des Netzwerks zugeordneten Knotennummern erfolgt dabei in der Regel durch einen Service-Techniker bzw. Netz-Administrator direkt am jeweiligen Netzknoten oder zentral ausgehend von einer Servicezentrale. Dieses Verfahren ist jedoch in Abhängigkeit von der Netzwerkgröße mit einem hohen Aufwand verbunden. Der vorliegenden Erfindung liegt daher die Aufgabe zugrunde, ein Verfahren und eine Anordnung vorzusehen, durch welche eine Zuweisung von Knotennummern zu Netzknoten eines Netzwerks komfortabler ermöglicht wird.

Die Lösung dieser Aufgabe erfolgt erfindungsgemäß durch die Merkmale des Patentanspruchs 1 bzw. durch die Merkmale des Patentanspruchs 8.

Ein wesentlicher Vorteil des erfindungsgemäßen Verfahrens bzw. der erfindungsgemäßen Anordnung besteht darin, daß eine Zuweisung von Knotennummern zu Netzknoten eines Netzwerks ausgehend von einer zentralen Einrichtung automatisch erfolgt, so daß der Aufwand für die Zuweisung minimal gehalten werden kann. Gleichzeitig wird die mit einer manuellen Eingabe einer großen Anzahl von Daten verbundene Fehleranfälligkeit reduziert, so daß die Wahrscheinlichkeit für eine Vergabe einer gleichen Knotennummer an zwei oder mehrere Netzknoten reduziert werden kann und somit die Übertragungsqualität innerhalb des Netzwerks erhöht wird.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Übermittlung von Nachrichten für ein Zuweisen von Knotennummer bzw. zur Ermittlung bereits vergebener Knotennummern über eine Signalisierungsverbindung, insbesondere einen D-Kanal einer ISDN-orientierten Verbindung, innerhalb des Netzwerks - in der Literatur häufig als 'Temporary Signaling Connection', kurz TSC bezeichnet - nur geringe Übertragungskapazitäten innerhalb des Netzwerks belegt werden und zusätzlich auch keine Gebühren anfallen.

Ein Ausführungsbeispiel der Erfindung wird im folgenden anhand der Zeichnung näher erläutert.

Dabei zeigen:
- Fig. 1:: ein Strukturbild zur schematischen Darstellung eines beispielhaften Netzwerks;
- Fig. 2:: ein Ablaufdiagramm zur Veranschaulichung der bei einer Zuweisung einer Knotennummer ablaufenden wesentlichen Verfahrensschritte;
- Fig. 3a:: ein erstes Ablaufdiagramm zur Veranschaulichung der bei einer Ermittlung der Netzwerktopologie ablaufenden wesentlichen Verfahrensschritte;
- Fig. 3b:: ein zweites Ablaufdiagramm zur Veranschaulichung der bei einer Ermittlung der Netzwerktopologie ablaufenden wesentlichen Verfahrensschritte.

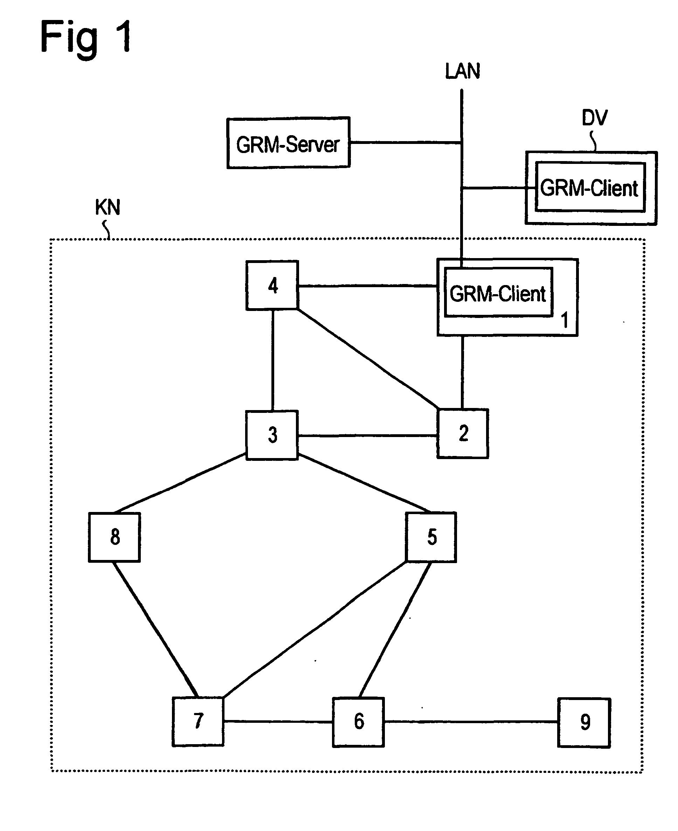

Fig. 1 zeigt ein Strukturbild eines beispielhaften Netzwerks KN, insbesondere eines verbindungsorientierten Netzwerks, anhand dessen das erfindungsgemäße Verfahren im folgenden veranschaulicht wird. Das Netzwerk KN ist dabei beispielsweise ein ISDN-orientiertes Kommunikationsnetz. Das Netzwerk KN umfaßt insgesamt neun Netzknoten 1,...,9 die untereinander in der dargestellten Weise miteinander verbunden sind. Das Netzwerk KN weist dabei eine Reihe von ringförmigen und kettenförmigen Netzwerkstrukturen auf. Ein Netzknoten 1,...,9 kann beispielsweise durch eine Kommunikationsanlage aber auch durch eine entsprechend ausgestaltete Datenverarbeitungseinrichtung, z.B. einen Personal Computer oder eine Workstation, realisiert sein.

Das Netzwerk KN ist über einen ersten Netzknoten 1 mit einem lokalen Netzwerk LAN verbunden. Eine Datenübermittlung über das lokale Netzwerk LAN erfolgt dabei gemäß dem IP-Protokoll (Internet Protocol). An das lokale Netzwerk LAN ist beispielhaft eine Datenverarbeitungseinrichtung DV angeschlossen. Des weiteren ist an das lokale Netzwerk LAN ein sogenannter GRM-Server (Global Routing Manager) angeschlossen, über den im vorliegenden Ausführungsbeispiel eine zentrale Administrierung von Knotennummern NODE-ID für die Netzknoten 1,...,9 des Netzwerks KN erfolgt.

Für eine Administrierung der den Netzknoten 1,...,9 des Netzwerks KN zugeordneten Knotennummern NODE-ID ist es erforderlich, daß der GRM-Server eine Information darüber erhält, welche Netzknoten 1,...,9 innerhalb des Netzwerks KN aktiv, d.h. am Netzwerk KN angemeldet sind. Für eine Kommunikation mit dem GRM-Server weist der erste Netzknoten 1 daher eine Kommunikationseinheit - in der Literatur häufig als GRM-Client bezeichnet - auf, über die Informationen zwischen dem GRM-Server und den Netzknoten 1,...,9 ausgetauscht werden.

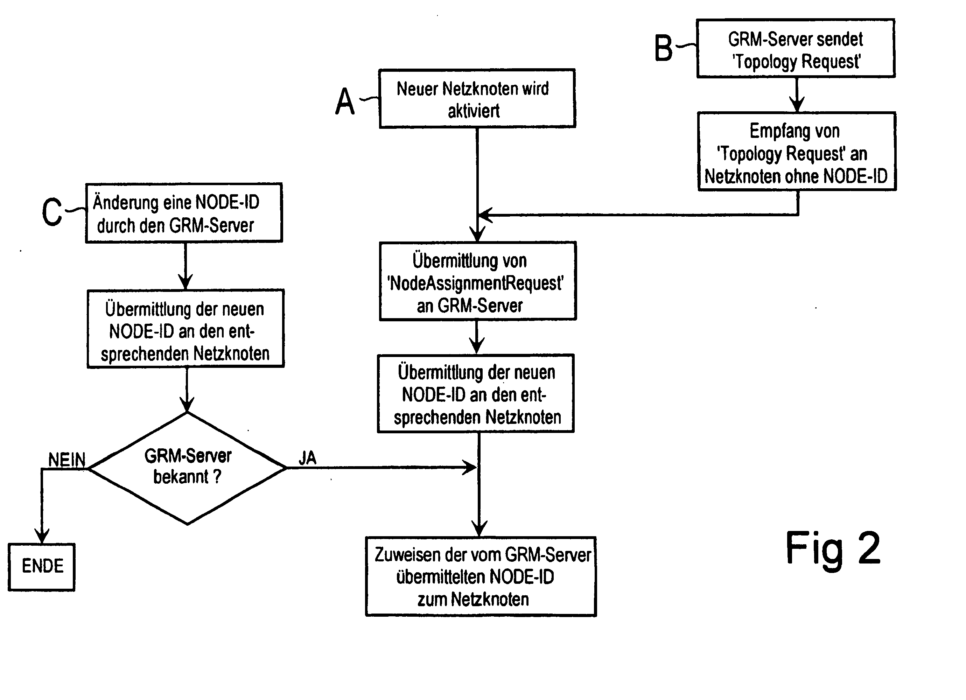

Fig. 2 zeigt ausgehend von drei unterschiedlichen Ausgangssituationen A,B,C ein Ablaufdiagramm zur Veranschaulichung der bei einer Zuweisung einer Knotennummer NODE-ID zu einem Netzknoten 1,...,9 des Netzwerks KN ablaufenden wesentlichen Verfahrensschritte.

Gemäß einer ersten Ausgangssituation A wird ein neuer Netzknoten 1,...,9 im Netzwerk KN aktiviert, d.h. der Netzknoten 1,...,9 wird am Netzwerk KN angemeldet. Dieser Netzknoten 1,...,9 sendet daraufhin über den ersten Netzknoten 1 eine Anforderungsmeldung 'NodeAssignmentRequest' an den GRM-Server, durch welche der Netzknoten 1,...,9 die Zuweisung einer Knotennummer NODE-ID anfordert. Der erste Netzknoten 1 setzt die über das Netzwerk KN empfangene - auf dem ISDN-Protokoll basierende - Anforderungsmeldung 'NodeAssignmentRequest' (Anforderungsnachricht) in eine entsprechende - auf dem IP-Protokoll basierende - Nachricht um und sendet die Nachricht über das lokale Netzwerk LAN an den GRM-Server. Der GRM-Server ermittelt daraufhin aus den für das Netzwerk KN zur Verfügung stehenden Knotennummern NODE-ID eine freie Knotennummer NODE-ID und übermittelt diese über den ersten Netzknoten 1 an denjenigen Netzknoten 1,...,9, der die Anforderungsmeldung 'NodeAssignmentRequest' an den GRM-Server übermittelt hat. Dem Netzknoten 1,...,9 ist die übermittelte Knotennummer 1,...,9 damit solange zugewiesen, bis der Netzknoten 1,...,9 am Netzwerk KN abgemeldet wird.

In Fällen, in denen der GRM-Server zum Zeitpunkt der Aktiverung des Netzknotens 1,...,9 nicht aktiv ist, werden durch den Netzknoten 1,...,9 lokal eine Default-Knotennummer und weitere knoten-spezifische Daten administriert, die für eine Datenübermittlung über das Netzwerk KN solange verwendet werden, bis der GRM-Server aktiviert wird. Nach einer Aktivierung werden die lokalen Daten mit dem GRM-Server abgeglichen und aktualisiert.

Gemäß einer zweiten Ausgangssituation B wird durch den GRM-Server eine Abfragemeldung (Abfragenachricht) über das lokale Netzwerk LAN gesendet. Der die Abfragemeldung empfangende erste Netzknoten 1 wandelt die - auf dem IP-Protokoll basierende - Nachricht in eine entsprechende - auf dem ISDN-Protokoll basierende - Abfragemeldung 'Topology Request' um und sendet die Abfragemeldung 'Topology Request' über das Netzwerk KN. Empfängt nun ein Netzknoten 1,...,9, dem bisher keine Knotennummer NODE-ID zugewiesen ist, die Abfragemeldung 'Topology Request' so sendet dieser Netzknoten 1,...,9 eine Anforderungsmeldung 'NodeAssignmentRequest' an den GRM-Server, durch welche der Netzknoten 1,...,9 die Zuweisung einer Knotennummer NODE-ID anfordert. Das Verfahren wird daraufhin analog mit denen unter der Ausgangssituation A beschriebenen Verfahrensschritten fortgesetzt.

Im Rahmen einer derartigen durch den GRM-Server initialisierten Abfragemeldung 'Topology Request' können sowohl die einem Netzknoten 1,...,9 im Netzwerk KN zugewiesene Knotennummer NODE-ID, als auch weitere knoten-spezifische Informationen abgefragt werden. Die knoten-spezifischen Informationen umfassen dabei beispielsweise einen sogenannten Knotennamen, eine dem Netzknoten 1,...,9 im Netzwerk KN zugewiesene Knotenadresse, eine Information über den Knotentyp - z.B. eine Kommunikationsanlage oder eine Datenverarbeitungseinrichtung -, eine Information über einen in einem Netzknoten 1,...,9 - insbesondere in einer Kommunikationsanlage - gespeicherten Rufnummernplan oder über ein in dem Netzknoten 1,...,9 gespeichertes LCR-Schema (Least Cost Routing).

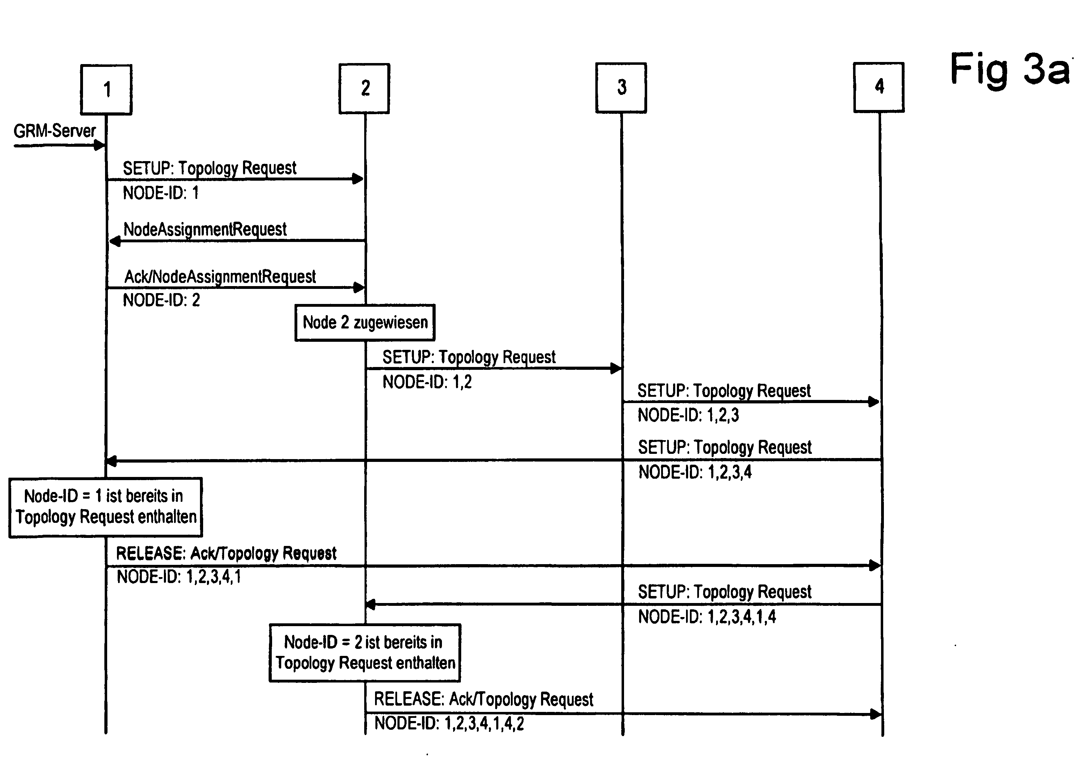

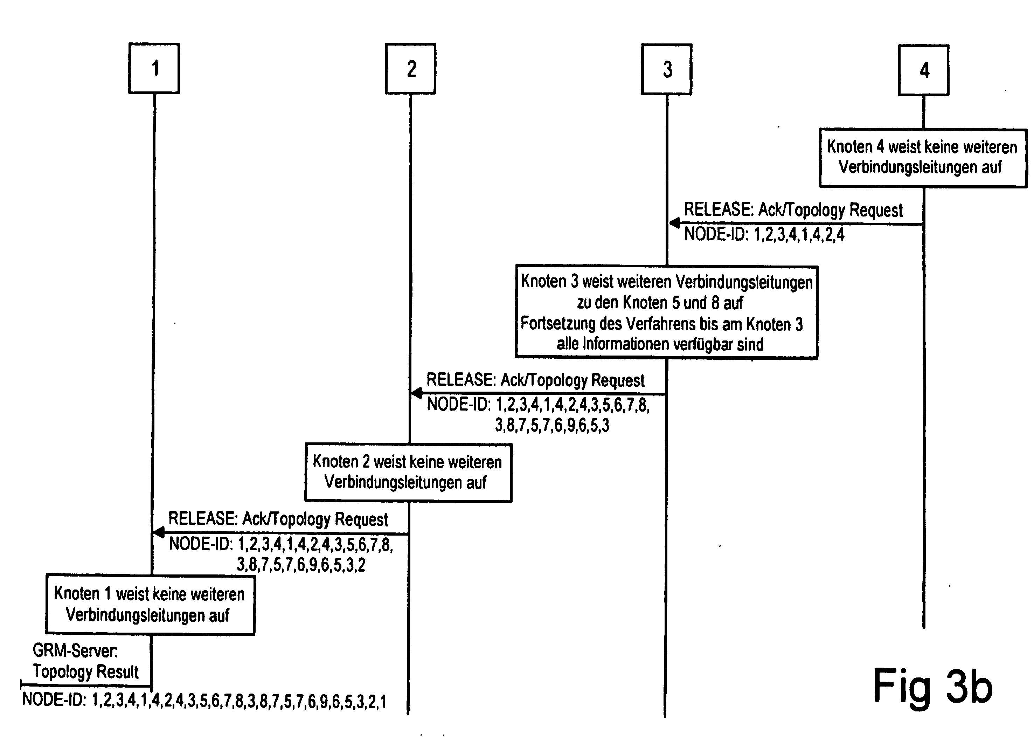

Durch eine derartige Abfragemeldung 'Topology Request' besteht die Möglichkeit sämtliche Information über das Netzwerk KN am GRM-Server zentral zu speichern. Durch die Speicherung sämtlicher netzwerk-spezifischen Informationen in einer zentralen Einrichtung kann eine effiziente Administrierung des Netzwerks KN ausgehend von dem GRM-Server gewährleistet werden. Beispielhaft wird unter Bezugnahme auf die Figuren 3a und 3b die für eine Ermittlung der Netzwerktopologie, d.h. die Ermittlung der im Netzwerk KN bereits vergebenen Knotennummern, im Netzwerk KN abgewickelte Kommunikation verdeutlicht.

Gemäß einer dritten Ausgangssituation C wird durch den GRM-Server zentral eine Änderung der im Netzwerk KN bereits vergebenen Knotennummern NODE-ID veranlaßt. Der eine entsprechende, eine Zuweisung eine neuen Knotennummer NODE-ID zu einem Netzknoten 1,...,9 veranlassende Nachricht vom GRM-Server empfangende erste Netzknoten 1 wandelt die - auf dem IP-Protokoll basierende - Nachricht in eine entsprechende - auf dem ISDN-Protokoll basierende - Nachricht um und sendet diese über das Netzwerk KN an den entsprechenden Netzknoten 1,...,9. Im Netzknoten 1,...,9 findet eine Überprüfung dahingehend statt, ob der die Nachricht sendende GRM-Server im Netzknoten 1,...,9 bekannt, d.h. für eine Änderung der Knotennummer NODE-ID berechtigt ist. Ist dies der Fall, wird die neue Knotennummer NODE-ID dem Netzknoten 1,...,9 zugewiesen.

Zur Veranschaulichung der zweiten Ausgangssituation B, bei der durch den GRM-Server eine Abfragemeldung versendet wird, zeigt Fig. 3 - bestehend aus Fig. 3a und Fig. 3b, wobei sich Fig. 3b unmittelbar an Fig.3a anschließt - ein Ablaufdiagramm zur Veranschaulichung der im Rahmen einer Ermittlung der am Netzwerk KN aktiven, bzw. angemeldeten Netzknoten 1, ...,9 ablaufenden wesentlichen Verfahrensschritte. Beim vorliegenden Ausführungsbeispiel sind dabei nur die ersten vier Netzknoten 1,...,4 des Netzwerks KN dargestellt. Des weiteren wird davon ausgegangen, daß den Netzknoten 1,3,...,9 des Netzwerks KN, mit Ausnahme des zweiten Netzknotens 2 bereits eine Knotennummer NODE-ID zugewiesen wurde.

Für eine Ermittlung der Netzwerktopologie ausgehend vom GRM-Server sendet dieser eine Abfragemeldung über das lokale Netzwerk LAN an den ersten Netzknoten 1, bzw. an den im ersten Netzknoten 1 angeordneten GRM-Client. Der erste Netzknoten 1, bzw. der GRM-Client des ersten Netzknotens 1 wandelt die - auf dem IP-Protokoll basierende - Anforderungsmeldung in das ISDN-Protokoll um und sendet eine Abfragemeldung 'SETUP: Topology Request, NODE-ID: 1' an einen der mit dem ersten Netzknoten 1 verbundenen Netzknoten 2,4. Im vorliegenden Ausführungsbeispiel an den zweiten Netzknoten 2. Da dem zweiten Netzknoten 2 im Netzwerk KN noch keine Knotennummer NODE-ID zugewiesen wurde, sendet dieser eine Anforderungsmeldung 'NodeAssignmentRequest' an den ersten Netzknoten 1. Der erste Netzknoten 1 ermittelt daraufhin - durch einen Zugriff auf den GRM-Server - eine freie Knotennummer NODE-ID - im vorliegenden Ausführungsbeispiel die Knotennummer NODE-ID=2 - und sendet eine entsprechende Antwortmeldung 'Ack/Node-AssignmentRequest NODE-ID:2' an den zweiten Netzknoten 2. Dem zweiten Netzknoten 2 ist damit die Knotennummer NODE-ID=2 zugewiesen.

In einem nächsten Schritt trägt der zweite Netzknoten 2 seine Knotennummer NODE-ID=2 in die Abfragemeldung ein und sendet eine Meldung 'SETUP: Topology Request, NODE-ID: 1,2' an einen der mit dem zweiten Netzknoten 2 verbundenen Netzknoten 3,4. Im vorliegenden Ausführungsbeispiel an den dritten Netzknoten 3. Dieser trägt seine Knotennummer NODE-ID=3 in die Abfragemeldung ein und sendet eine Meldung 'SETUP: Topology Request, NODE-ID: 1,2,3' an einen der mit dem dritten Netzknoten 3 verbundenen Netzknoten 4,5,8. Im vorliegenden Ausführungsbeispiel an den vierten Netzknoten 4. Der vierte Netzknoten 4 trägt wiederum seine Knotennummer NODE-ID=4 in die Abfragemeldung ein und sendet eine Meldung 'SETUP: Topology Request, NODE-ID: 1,2,3,4' an einen der mit dem vierten Netzknoten 4 verbundenen Netzknoten 1,2. Im vorliegenden Ausführungsbeispiel an den ersten Netzknoten 1.

Der erste Netzknoten 1 erkennt, daß seine Knotennummer NODE-ID=1 bereits in der Abfragemeldung eingetragen ist. Daraufhin trägt der erste Netzknoten 1 erneut seine Knotennummer NODE-ID=1 in die Abfragemeldung ein und sendet eine Meldung 'RELEASE: Ack/Topology Request, NODE-ID: 1,2,3,4,1' zurück an den vierten Netzknoten 4. Dieser trägt erneut seine Knotennummer NODE-ID=4 in die Abfragemeldung ein und sendet eine Meldung 'SETUP: Topology Request, NODE-ID: 1,2,3,4,1,4' an den vorher nicht ausgewählten Netzknoten 2. Der zweite Netzknoten 2 erkennt ebenfalls, daß seine Knotennummer NODE-ID=2 bereits in der Abfragemeldung eingetragen ist und trägt daraufhin seine Knotennummer NODE-ID=2 in die Abfragemeldung ein und sendet eine Meldung 'RELEASE: Ack/Topology Request, NODE-ID: 1,2,3,4,1,4,2' zurück an den vierten Netzknoten 4.

Der vierte Netzknoten 4 weist damit keine weiteren Verbindungsleitungen auf. Er trägt seine Knotennummer NODE-ID=4 erneut in die Abfragemeldung ein und sendet eine Meldung 'RELEASE: Ack/Topology Request, NODE-ID: 1,2,3,4,1,4,2,4' zurück an den dritten Netzknoten 3, vom dem er die Abfragemeldung ursprünglich erhalten hat. Der dritte Netzknoten 3 weist im Gegensatz zum vierten Netzknoten 4 weitere, noch nicht berücksichtigte Verbindungsleitungen zu den Netzknoten 5 und 8 auf und setzt das Verfahren mit den beschriebenen Verfahrensschritten fort. Das Verfahren wird dabei solange fortgesetzt, bis alle Informationen über das Teil-Netzwerk bestehend aus den Netzknoten 3,5,6,7,8,9 am dritten Netzknoten 3 verfügbar sind.

Der dritte Netzknoten weist damit keine weiteren Verbindungsleitungen auf. Er trägt daraufhin seine Knotennummer NODE-ID=3 erneut in die Abfragemeldung ein und sendet eine Meldung 'RELEASE: Ack/Topology Request, NODE-ID: 1,2,3,4,1,4, 2,4,3,5,6,7,8,3,8,7,5,7,6,9,6,5,3' zurück an den zweiten Netzknoten 2, vom dem er die Abfragemeldung ursprünglich erhalten hat. Der zweite Netzknoten weist damit ebenfalls keine weiteren, noch nicht berücksichtigte Verbindungsleitungen auf. Er trägt seine Knotennummer NODE-ID=2 in die Abfragemeldung ein und sendet eine Meldung 'RELEASE: Ack/Topology Request, NODE-ID: 1,2,3,4,1,4,2,4,3,5,6,7,8,3,8,7,5,7,6,9, 6,5,3,2' zurück an den ersten Netzknoten 1, vom dem er die Abfragemeldung ursprünglich erhalten hat. Der erste Netzknoten weist damit ebenfalls keine weiteren, noch nicht berücksichtigte Verbindungsleitungen auf. Er trägt daraufhin seine Knotennummer NODE-ID=1 in die Abfragemeldung ein und sendet abschließend eine Meldung 'GRM-Server: Topology Result, NODE-ID: 1,2,3,4,1,4,2,4,3,5,6,7,8,3,8,7,5,7,6,9,6,5,3,2,1' an den GRM-Server. Der GRM-Server speichert die mittels der Abfragemeldung gewonnene Information über die Netzwerktopologie entsprechend, beispielsweise in tabellarischer Form, ab. Ein Verfahren wie eine Darstellung der Netzwerktopologie des Netzwerks KN anhand der in Form der Knotennummern NODE-ID gewonnen Information erfolgen kann wurde bereits in der deutschen Patentanmeldung mit dem firmeninternen Anmeldekennzeichen 2000 15779 vorgeschlagen.

Die Meldungen der Abfragemeldung und der Anforderungsmeldung werden über eine Signalisierungsverbindung - in der Literatur häufig als 'Temporary Signaling Connection, kurz TSC bezeichnet - des Netzwerks KN - beispielsweise einen D-Kanal einer ISDN-Verbindung - übermittelt. Auf diese Weise werden nur geringe Übertragungskapazitäten innerhalb des Netzwerks KN belegt und es entstehen keine zusätzlichen Gebühren für die Ermittlung der Netzwerktopologie.

## Patentansprüche

1. Verfahren zur Zuweisung von Knotennummern (NODE-ID) zu Netzknoten (1,...,9) eines Netzwerks (KN), wobei das Netzwerk (KN) mit einer zentralen, eine Administrierung der für das Netzwerk (KN) zur Verfügung stehenden Knotennummern vornehmenden Einrichtung (GRM-Server) verbunden ist,
**dadurch gekennzeichnet, dass**
- von dem Netzknoten (2) eine Anforderungsmeldung an die zentrale Einrichtung (GRM-Server) übermittelt wird,
- durch die zentrale Einrichtung (GRM-Server) eine freie Knotennummer aus den zur Verfügung stehenden Knotennummern ermittelt wird,
- die ermittelte Knotennummer an den Netzknoten (2) übermittelt und diesem Netzknoten (2) zugewiesen wird, und
- als das Netzwerk (KN) ein verbindungsorientiertes Netzwerk verwendet wird.

2. Verfahren nach Anspruch 1,
**dadurch gekennzeichnet,**
**daß** die Anforderungsmeldung in Fällen von einem Netzknoten (2), dem noch keine Knotennummer zugewiesen ist, an die zentrale Einrichtung (GRM-Server) übermittelt wird, in denen dieser Netzknoten (2) am Netzwerk (KN) neu angemeldet wird.

3. Verfahren nach Anspruch 2,
**dadurch gekennzeichnet,**
**daß** in Fällen, in denen die zentrale Einrichtung (GRM-Server) zum Zeitpunkt der Anmeldung des Netzknotens (2) nicht aktiv ist, knoten-spezifische Daten lokal durch den Netzknoten (2) administriert werden, und
**daß** diese lokal administrierten Daten nach Aktivierung der zentralen Einrichtung (GRM-Server) mit der zentralen Einrichtung (GRM-Server) abgeglichen und aktualisiert werden.

4. Verfahren nach Anspruch 1,
**dadurch gekennzeichnet,**
**daß** die Anforderungsmeldung in den Fällen an die zentrale Einrichtung (GRM-Server) übermittelt wird, in denen eine Änderung bei den bereits zugewiesenen Knotennummern (NODE-ID) vorzunehmen ist.

5. Verfahren nach Anspruch 4,
**dadurch gekennzeichnet,**
**daß** eine neu zugewiesene Knotennummer durch einen Netzknoten (1,...,9) nur in den Fällen akzeptiert wird, in denen die zentrale Einrichtung (GRM-Server) für eine Zuweisung von Knotennummern (NODE-ID) berechtigt ist.

6. Verfahren nach Anspruch 1,
**dadurch gekennzeichnet,**
**daß** die Anforderungsmeldung in den Fällen von einem Netzknoten (1,...,9) an die zentrale Einrichtung (GRM-Server) übermittelt wird, in denen der Netzknoten (1,...,9) zuvor eine Abfragemeldung von der Einrichtung (GRM-Server) empfangen hat und dem Netzknoten (1...9) noch keine Knotennummer (NODE-ID) zugewiesen ist.

7. Verfahren nach Anspruch 6,
**dadurch gekennzeichnet,**
**daß** im Rahmen der Abfragemeldung zusätzlich knoten-spezifische Informationen vom Netzknoten (1,...,9) an die zentrale Einrichtung (GRM-Server) übermittelt werden.

8. Verfahren nach einem der vorhergehenden Ansprüche,
**dadurch gekennzeichnet,**
**daß** die Anforderungsmeldung und/oder die Abfragemeldung über eine temporäre Signalisierungsverbindung innerhalb des Netzwerks (KN) übermittelt werden.

9. Anordnung zur Zuweisung von Knotennummern zu Netzknoten (1,...,9) eines Netzwerks (KN),
mit einer zentralen Einrichtung (GRM-Server) zur Administrierung der für das Netzwerk (KN) zur Verfügung stehenden Knotennummern (NODE-ID),
mit einer dezentralen Kommunikationseinheit (GRM-Client) in zumindest einer der Netzknoten (1,...,9) zur Kommunikation mit der zentralen Einrichtung (GRM-Server), wobei die dezentrale Kommunikationseinheit (GRM-Client) zur Zuweisung einer im Rahmen einer Anforderungsmeldung durch die zentrale Einrichtung (GRM-Server) ermittelte freie Knotennummer (NODE-ID) zu einem Netzknoten (1,...,9) ausgebildet ist,
wobei das Netzwerk (KN) als verbindungsorientiertes Netzwerk ausgebildet ist.

10. Anordnung nach Anspruch 9,
**dadurch gekennzeichnet,**
**daß** die zentrale Einrichtung (GRM-Server) über ein lokales Netzwerk (LAN) mit einem der Netzknoten (1) des Netzwerks (KN) verbunden ist.

## Claims

1. Method for assigning node numbers (NODE-ID) to network nodes (1 , ... , 9) in a network (KN), the network (KN) being connected to a central device (GRM server) performing administration of the node numbers available for the network (KN),
**characterized in that**
- a request message is transmitted from the network node (2) to the central device (GRM server),
- the central device (GRM server) ascertains a free node number from the available node numbers,
- the ascertained node number is transmitted to the network node (2) and is assigned to this network node (2), and
- a connection-oriented network is used as the network (KN).

2. Method according to Claim 1,
**characterized**
**in that** the request message is transmitted from a network node (2) which has not yet been assigned a node number to the central device (GRM server) in cases in which this network node (2) is being newly registered on the network (KN).

3. Method according to Claim 2,
**characterized**
**in that**, in cases in which the central device (GRM server) is not active at the instant at which the network node (2) is registered, node-specific data are administered locally by the network node (2), and
**in that**, when the central device (GRM server) has been activated, these locally administered data are brought into line with the central device (GRM server) and are updated.

4. Method according to Claim 1,
**characterized**
**in that** the request message is transmitted to the central device (GRM server) in the cases in which a change needs to be made for the already assigned node numbers (NODE-ID).

5. Method according to Claim 4,
**characterized**
**in that** a newly assigned node number is accepted by a network node (1,...,9) only in the cases in which the central device (GRM server) is authorized to assign node numbers (NODE-ID).

6. Method according to Claim 1,
**characterized**
**in that** the request message is transmitted from a network node (1,...,9) to the central device (GRM server) in the cases in which the network node (1,...,9) has previously received a polling message from the device (GRM server), and the network node (1...9) has not yet been assigned a node number (NODE-ID).

7. Method according to Claim 6,
**characterized**
**in that**, within the context of the polling message, node-specific information is additionally transmitted from the network node (1,...,9) to the central device (GRM server).

8. Method according to one of the preceding claims,
**characterized**
**in that** the request message and/or the polling message are transmitted via a temporary signalling connection within the network (KN).

9. Arrangement for assigning node numbers to network nodes (1,...,9) in a network (KN),
having a central device (GRM server) for administering the node numbers (NODE-ID) available for the network (KN),
having a local communication unit (GRM client) at at least one of the network nodes (1,...,9) for the purposes of communicating with the central device (GRM server), the local communication unit (GRM client) being designed to assign a free node number (NODE-ID) ascertained by the central device (GRM server) within the context of a request message to a network node (1,...,9),
the network (KN) being designed as a connection-oriented network.

10. Arrangement according to Claim 9,
**characterized**
**in that** the central device (GRM server) is connected to one of the network nodes (1) in the network (KN) via a local area network (LAN).

## Revendications

1. Procédé d'attribution de numéros de noeuds (NODE-ID) à des noeuds de réseau (1 à 9) d'un réseau (KN), le réseau (KN) étant relié à un dispositif central (GRM-Server) effectuant une gestion des numéros de noeuds disponibles pour le réseau (KN),
**caractérisé par le fait que**
- le noeud de réseau (2) transmet un message de demande au dispositif central (GRM-Server),
- le dispositif central (GRM-Server) détermine un numéro de noeud libre parmi les numéros de noeuds disponibles,
- le numéro de noeud déterminé est transmis au noeud de réseau (2) et est attribué à ce noeud de réseau (2), et
- on utilise comme réseau (KN) un réseau orienté connexion.

2. Procédé selon la revendication 1,
**caractérisé par le fait que**, dans le cas d'un noeud de réseau (2) auquel aucun numéro de noeud n'est encore attribué, le message de demande est transmis au dispositif central (GRM-Server) lorsque ce nouveau noeud de réseau (2) s'enregistre auprès du réseau (KN).

3. Procédé selon la revendication 2,
**caractérisé par le fait que**,
lorsque le dispositif central (GRM-Server) n'est pas actif à l'instant de l'enregistrement du noeud de réseau (2), des données spécifiques au noeud sont gérées localement par le noeud de réseau (2), et
après l'activation du dispositif central (GRM-Server), ces données gérées localement sont ajustées et actualisées avec le dispositif central (GRM-Server).

4. Procédé selon la revendication 1,
**caractérisé par le fait que**, lorsqu'une modification est à effectuer sur les noeuds de réseau (NODE-ID) déjà attribués, le message de demande est transmis au dispositif central (GRM-Server).

5. Procédé selon la revendication 4,
**caractérisé par le fait qu'**un numéro de noeud nouvellement attribué n'est accepté par un noeud de réseau (1 à 9) que lorsque le dispositif central (GRM-Server) est autorisé à effectuer une attribution de numéros de noeuds (NODE-ID).

6. Procédé selon la revendication 1,
**caractérisé par le fait que** le message de demande est transmis par un noeud de réseau (1 à 9) au dispositif central (GRM-Server) lorsque le noeud de réseau (1 à 9) a reçu préalablement un message d'interrogation du dispositif central (GRM-Server) et lorsque aucun noeud de réseau (NODE-ID) n'est encore attribué au noeud de réseau (1 à 9).

7. Procédé selon la revendication 6,
**caractérisé par le fait que**, dans le cadre du message d'interrogation, des informations spécifiques au noeud sont transmises en plus par le noeud de réseau (1 à 9) au dispositif central (GRM-Server).

8. Procédé selon l'une des revendications précédentes,
**caractérisé par le fait que** le message de demande et/ou le message d'interrogation sont transmis par l'intermédiaire d'une liaison de signalisation temporaire à l'intérieur du réseau (KN).

9. Système d'attribution de numéros de noeuds à des noeuds de réseau (1 à 9) d'un réseau (KN),
avec un dispositif central (GRM-Server) pour la gestion des numéros de noeuds (NODE-ID) disponibles pour le réseau (KN),
avec une unité de communication décentralisée (GRM-Client) dans au moins l'un des noeuds de réseau (1 à 9) pour la communication avec le dispositif central (GRM-Server), l'unité de communication décentralisée (GRM-Client) étant conçue pour l'attribution d'un numéro de noeud libre (NODE-ID), déterminé par le dispositif central (GRM-Server) dans le cadre d'un message de demande, à un noeud de réseau (1 à 9),
le réseau (KN) étant conçu comme un réseau orienté connexion.

10. Système selon la revendication 9,
**caractérisé par le fait que** le dispositif central (GRM-Server) est relié par l'intermédiaire d'un réseau local (LAN) à l'un des noeuds de réseau (1) du réseau (KN).
